# EUROPEAN PATENT APPLICATION

(11) **EP 1 398 104 A2**
(43) Date of publication of application: **17.03.2004**
(21) Application number: 03016101.2
(22) Date of filing: 16.07.2003
(51) Int. Cl.: B23H 7/26, B23H 7/18

(54) **Electrical discharge machine comprising a mechanical feed device for the tool electrode with an extended dynamic control**

(30) Priority: 17.07.2002 IT TO20020626
(71) Applicant: C.D.M. Rovella S.p.A., 10099 San Mauro Torinese (Torino) (IT)
(72) Inventor: Marzola, Paolo, 10072 Caselle Torinese (Torino) (IT)
(74) Representative: Deambrogi, Edgardo

(57) **Abstract**

This document contains a description of a die-sinking electrical discharge machine (10), specifically but not exclusively used to produce dies, comprising a machining tool electrode (12) moved along at least one vertical axis by a feed device (24) coupled with at least one rotary electrical motor (22). The rotary electrical motor (22) is a brushless motor connected directly to a rotating drive part (26) for the feed device (24), whose moving driven part (28) is coupled with the tool (12). A control unit (36) to operate the motor (22) controls the rotation of the motor (22) in accordance with its angular position in a closed loop control configuration.

## Description

This invention concerns in general a tool machine to mold dies or machine parts by means of electrical discharges, and more specifically is a die-sinking electrical discharge machine with mechanical tool feed devices controlled by rotary electrical motors.

In the electrical discharge machining (EDM) process, the part is machined by moving a tool electrode whose three-dimensional shape basically complements the shape to be obtained on the die, and by controlling the application of a series of electrical discharges between the tool and the machined part to remove material from the part.

During the machining process, the tool electrode is fed to or withdrawn from the machined part by controlling the intensity and series of electrical discharges based upon the shape and depth to be achieved, and depending upon the desired surface quality of the part.

The said operations are performed automatically by the machine by means of a system that retroactively controls the movement of the tool and the application of the electrical pulses.

The parameters determining the recurring electrical discharges, or their method of application and duration, as well as the peak current, are critical to the results of the machining (speed of execution and precision of machining, surface irregularities of the machined part, wear of the electrode) and must be precisely controlled to obtain satisfactory results. This control is obtained by continuously adjusting the relative distance between the tool and the part.

One aspect of die-sinking electrical discharge machining is that the tool electrode works in a blind cavity produced by the erosion, in which particles are constantly deposited in the form of granular particles created by the resolidification of the fused material removed.

Removing the particles poses a particular problem, because if they are not removed efficiently the electrical discharge process will come to a stall, preventing the machine from effectively removing the material.

Traditionally, the particles are actually removed from the machined cavity by a washing process, in which the dielectric liquid surrounding the work area is kept in constant circulation by a pump or pressure fed to the work area or drawn in by depression during the erosion process.

The drawback of this solution is that the dielectric liquid has to be kept in constant circulation so the particles tends to redeposit itself on the sides of the cavity near the upper edges, where it creates a bridge between the tool electrode and the part electrode by increasing the conductivity of the dielectric liquid and triggering unwanted electrical discharges.

The washing process can be improved by preferably controlling the extraction and introduction of the machining tool at regular intervals to recirculate the dielectric liquid as a result of the plunging movement of the tool in the erosion cavity.

A control unit controls the movement of the tool along at least one normal feed axis to the surface of the part and controls the supply of electric current to the part during the erosion process, based on predetermined machining parameters.

Techniques developed to control the electrical discharges have led to the creation of advanced generators retroactively controlled by appropriately programmed microprocessors to adaptively control in an optimal manner the discharges based upon the relative distance between the electrodes and the state of cleanliness of the cavity.

From this standpoint, it is even more important to have an efficient automatic feed device for the machining head to control the relative motion of the tool with respect to the part, during both its macro movements toward and away from the part to perform the washing operations as well as its micro movements to distribute the discharges optimally between the electrodes during the erosion process.

The use of hydraulic actuators controlled by servovalves (with which the maximum speed that the tool can obtain for steady machining is approximately 1m per minute) was rejected for applications of this type in favor of the quicker mechanical actuators with electrical servo motors whose speed can be more precisely adjusted.

With machines using the common technique the head on which the machining tool is mounted is controlled as it moves toward and away from the part by a feed device comprising at least one rotary electrical motor coupled with a rotary-to-linear motion conversion mechanism (worm gear - ball screw unit) by means of a reduction mechanism (belt-pulley or reduction gears). This device produces the desired torque to move the machining head by means of a simple electric motor that is inexpensive and small.

By retroactively controlling the speed of movement of the tool-holder head, speeds of 1-1.5m per minute and accelerations of 0.5m/s² can be reached.

The reduction mechanism creates a certain degree of elasticity between the parts and a considerable inertia so its position between the motor and its charge worsens the response times of the system and limits the frequency band available to move the tool.

Linear motors provide an alternative solution, offering good performance in terms of speed and acceleration (machines can do up to 36m per minute and accelerations of 1g) and do not require motion conversion mechanisms, reducing the undesired play between the feed device parts and the problems associated with the inertia of some parts.

A drawback of these motors, however, is their limited efficiency and high energy dissipation, and they also require a complicated mechanical architecture to ensure that the machine stops on the vertical axes in the case of interrupted operation and prevents the machining head from falling onto the part, since this is not an irreversible system.

The purpose of this invention is to provide a simple electrical discharge machine that is reliable, small, with an extended dynamic control of the movement of the tool, overcoming the problems of the common technique.

This and other goals have been achieved by the invented machine whose main features are described in the attached claim 1. The particular methods by which the invention was created are described in separate claims.

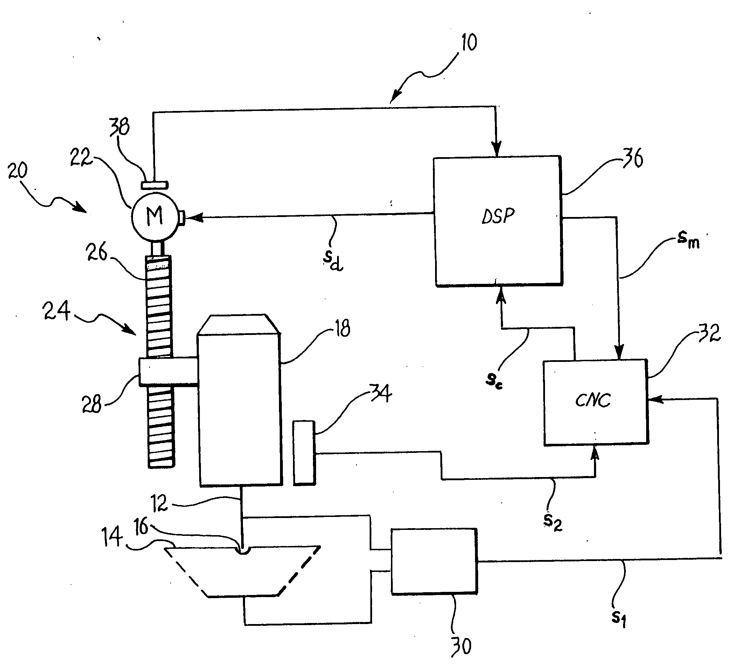

Details of the features and advantages of the invention are provided in the following description of its method of operation, provided purely by way of example, with reference to the attached figure, whose functional block diagram displays the invented electrical discharge machine.

The die-sinking electrical discharge machine which is preferably, but not exclusively, used to produce moulds is indicated in the diagram by the number 10, and comprises a machining tool electrode 12 in a shape that complements the form to be stamped on a machined part 14, whose controlled movement toward the part creates, by means of erosion, a cavity 16 in the part that inversely corresponds to the shape of the tool.

The tool electrode 12 is moved along an axis toward or away from the part by means of a tool-holder head 18 which may be supported as it moves along the axis by lateral support tracks with rollers (not shown).

The following description will refer only to the axial movement of the tool, but it will be obvious to any technician in the sector that the description may also refer to a more general spatial movement in the case of vector or rotary machining.

The movement of the head is controlled by a feed device 20 comprising a brushless rotary electrical motor 22 which is directly connected to a mechanism 24 that irreversibly converts the motion from rotary to linear, consisting for example of a ball rotating worm gear 26 upon which a worm screw and female screw 28 run together with the head 18.

A generator (not shown) is connected to the tool 12 and the part 14 to supply the electric current and control the triggering of the discharges and the execution of the erosion process. Connected to this is a control system 30 that continuously monitors the process by analyzing the state of electrical magnitude of the voltage and current between the electrodes.

A numerically controlled control unit 32 (CNC) is connected to the control system 30, from which it receives a system status signal s₁, and to a position transducer 34 connected to the tool-holder head, from which it receives a signal s₂, indicating the axial position of the tool electrode with respect to the machined part.

A drive system 36 for the electrical motor, specifically a digital signal processor (DSP), is connected to the control unit 32 and an encoder device 38 which is connected to the motor to detect the angular position.

The generator supplies an electric current to the tool electrode and controls the triggering of the discharges and the execution of the erosion process based upon predetermined machining parameters.

The numerically controlled control unit 32 simultaneously receives information about the status of the erosion process from the system 30 and controls the movement of the tool along the normal feed axis to the surface of the part, in order to vary the rates of speed and acceleration in accordance with the relative distance between the tool electrode and the part electrode and the actual phase of operation (electrical discharge machining, washing).

The drive system 36 of the electric motor 22 receives a control signal s_{c} from the control unit 32 varying the angular speed of the motor and transmits a corresponding drive signal s_{d} to the motor. It also informs the control unit 32 about the status of the motor by means of one or more control signals sₘ, for example providing information about the angular position of the motor.

The encoder device 38 is connected to the processor 36 to transmit to it a signal of the position of the motor s_{α}, which is sent by the processor 36 to the control unit 32. Knowing the angular position of the motor at any given moment allows the appropriate control of the elecromagnetic fields required to set the tool electrode in rotation in one direction or the other to move it toward or away from the machining position.

The use of a brushless motor has proven to be the optimal solution to improve the size/delivered torque ratio as compared to the motors usually used, since a motor with the same size as a motor with brushes can deliver a torque up to 3 times greater, thus eliminating the need for any reduction mechanism between the electric motor and the mechanical feed device.

The use of the brushless electric motor is now an inexpensive, competitive solution due to the developments in drive electronics that provide a 30-40% improvement in efficiency as compared to the common technique which is based on using motors with brushes with belt transmission or similar reduction gear.

This allows the movement of the tool electrode both toward and away from the part to be controlled quickly and efficiently without significant lags between control and operation, thus improving the response time of the system. This is a fundamental aspect for controlling the process phase in which the tool must make a large excursion to wash the machining cavity, and during which the electrical discharges and the erosion process are interrupted, and the next control phase to move the tool into position to start machining again.

The features of the invention described offer the advantage of being able to be used for any type of electrical discharge machining, ranging from electrical discharge molding by drilling to creating three-dimensional molds, matrices, dies and molding equipment, to electrical discharge grinding with a disc electrode and electrical discharge cutting to cut off parts.

Of course, with the understanding of the principle of the intervention, the methods of operation and the details of creation can be greatly varied with respect to what has been described and illustrated purely by way of example, and still remain within the bounds of protection defined by the attached claims.

## Claims

1. Die-sinking electrical discharge machine (10), specifically but not exclusively used to produce dies, comprising:
a machining tool electrode (12) in a shape that complements the form to be produced on the machined part (14),
a device (20) to move the said tool (12) along at least one normal feed axis to the surface of the part (14), connected to at least one rotary electrical motor (22) and comprising a means of transmission (24) to convert the rotary motion produced by the motor (22) into a linear motion of the tool (12), and
a means of operating (36) the motor in a predetermined manner, in accordance with the measurement at any given moment of the reciprocal distance between the tool (12) and the part (14),
the machine (10), comprising the following features:
at least one brushless rotary electrical motor (22) connected directly to a rotary drive part (26) of the said means of transmission (24), whose moving driven part (28) is connected to the tool (12) ; and sensor means (38) connected to the said motor (22) to detect the angular position at any given moment,
and the said means of motor operation (22) comprising a control unit (36) with an input connected to the sensor means (38) and an output connected to the motor (22), to control the rotation of the motor (22) in accordance with its angular position in a closed loop control configuration.

2. Electrical discharge machine (10) in accordance with claim 1, in which the said control unit (36) is connected to a numerically controlled processing unit (32) to receive a signal (s₂) indicating the axial position of the tool (12) with respect to the part (14) by means of a position transducer (34) connected to the said tool (12).

3. Electrical discharge machine (10) in accordance with claim 1, in which the said control unit (36) is connected to the numerically controlled processing unit (32). to receive a signal (s₁) indicating the status of the erosion process by a system of controlling (30) the voltage and electric current established between the tool electrode (12) and part (14).

4. Electrical discharge machine (10) in accordance with any of the previous claims, in which the said sensor means comprises an encoder (38).

5. Electrical discharge machine (10) in accordance with any of the previous claims, in which the said control unit comprises a digital signal processor (36).

6. Electrical discharge machine (10) in accordance with any of the previous claims, in which the said motion transmission means (24) creates an elicoidal connection between a worm gear type drive part (26) and a female screw type driven part (28).
All of the above is essentially in accordance with what has been described and illustrated, and for the specified purposes.
